(19) Europäisches Patentamt
European Patent Office
Office européen des brevets

(11) Publication number: **0 184 591**
**A1**

(12) **EUROPEAN PATENT APPLICATION**

(21) Application number: **84115322.4**

(22) Date of filing: **13.12.84**

(51) Int. Cl.[4]: **C 08 G 73/14**, C 08 G 18/64, H 01 B 3/30

(43) Date of publication of application: **18.06.86**
**Bulletin 86/25**

(84) Designated Contracting States: **DE FR GB IT NL**

(71) Applicant: **GENERAL ELECTRIC COMPANY, 1 River Road, Schenectady New York 12305 (US)**

(72) Inventor: **Gorczyca, Thomas Bert, 117 Henry Street Schenectady, New York 12304 (US)**
Inventor: **Bolon, Donald Allen, 12 Cedar Lane, Scotia, New York 12302 (US)**

(74) Representative: **Catherine, Alain, General Electric - Deutschland Munich Patent Operations Frauenstrasse 32, D-8000 München 5 (DE)**

(54) **Novel copolyamideimides, prepolymers therefor and method for their preparation.**

(57) Carboxy-terminated prepolymers are prepared by the reaction of a diamine, preferably an aromatic diamine, with a carboxy anhydride such as trimellitic anhydride and a dianhydride such as bisphenol A dianhydride. The prepolymers, or functional derivatives thereof, are then reacted with a diisocyanate or diamine, preferably an aromatic diisocyanate, to produce copolyamideimides.

EP 0 184 591 A1

# NOVEL COPOLYAMIDEIMIDES, PREPOLYMERS THEREFOR AND METHOD FOR THEIR PREPARATION

This invention relates to new polymeric compositions of matter and methods for their preparation. In a more particular sense, it relates to copolyamideimides, methods for their preparation, and carboxy-terminated polyimide prepolymer intermediates for the preparation thereof, as more fully defined hereinafter.

Various polyamides and polyimides prepared by the reaction of polycarboxylic acids and their functional derivatives with polyamides and/or polyisocyanates are known in the art. For example, British published application 2,080,316 discloses the reaction of a mixture of one or more dianhydrides and a tribasic acid anhydride with a diamine, diisocyanate or mixture thereof to produce polymers containing both amide and imide linkages. Other reactions of diamines with polycarboxylic acid anhydrides are disclosed in U.S. Patent 3,975,345. The reaction of diisocyanates with various combinations of dicarboxylic, tricarboxylic and tetracarboxylic acids and their anhydrides are disclosed in the following U.S. patents:

3,843,587
3,929,691
4,061,622

According to U.S. Patent 4,331,799, polymers containing both amide and imide moieties can be prepared by reacting diamines with a mixture of a dianhydride and the acyl chloride of a carboxy anhydride, such as trimellitic anhydride.

This reaction and the others disclosed as described above produce polymers of random and relatively uncontrollable structure and properties. Among the results may be high susceptibility to heat distortion and low glass transition temperature. Moreover, the use of an acyl chloride as a precursor may result in the presence of residual chloride in the polymer,

an unacceptable situation for certain utilities (for example as electrical insulators).

A principal object of the present invention, therefore, is to provide novel copolyamideimides and intermediates therefor.

A further object is to provide copolyamideimides with relatively high glass transition temperatures and resistance to heat distortion.

A further object is to provide relatively simple methods for the preparation of copolyamideimides as described above.

A still further object is to provide novel prepolymers capable of conversion into such copolyamideimides.

Other objects will in part be obvious and will in part appear hereinafter.

The present invention has two major aspects, one relating to carboxy-terminated polyimide prepolymers and the other to copolyamideimides prepared therefrom. The prepolymers are prepared by a method which comprises reacting, under conditions whereby all water of reaction is removed:

(A) at least one diamine having the formula

(I) $H_2N-R^1-NH_2$ ,

wherein $R^1$ is a divalent hydrocarbon-based radical, with

(B) at least one carboxy anhydride of the formula

(II) 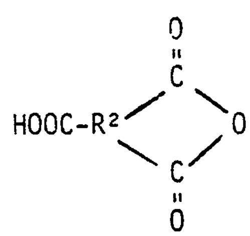 ,

wherein $R^2$ is a trivalent hydrocarbon-based radical, and

(C) at least one dianhydride of the formula

(III) 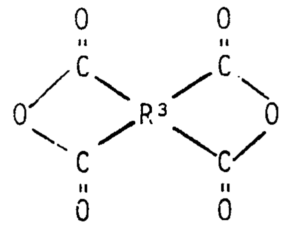 ,

wherein $R^3$ is a tetravalent hydrocarbon-based radical;

the molar ratio of reagent C to reagent B being at least about 0.25:1 and the ratio of equivalents of reagent A to anhydride equivalents of reagents B and C combined being about 1:1.

The copolyamideimides are prepared by reacting (D) said prepolymer, or a functional derivative thereof, with (E) at least one of diisocyanates having the formula

(IV) $OCN\text{-}R^4\text{-}NCO$

and diamines having the formula

(V) $R^5NH\text{-}R^4\text{-}NHR^6$,

wherein $R^4$ is a divalent hydrocarbon-based or polymeric radical and each of $R^5$ and $R^6$ is independently hydrogen or a lower hydrocarbon-based radical.

As used herein, the term "hydrocarbon-based radical" denotes a radical free from acetylenic and usually also from ethylenic unsaturation, having a carbon atom directly attached to the remainder of the molecule and having predominantly hydrocarbon character within the context of this invention. Such radicals include the following:

(1) Hydrocarbon radicals; that is, aliphatic, alicyclic, aromatic, aliphatic- and alicyclic-substituted aromatic, aromatic-substituted aliphatic and alicyclic radicals, and the like. Such radicals are known to those skilled in the art; examples are methyl, ethyl, propyl, butyl, decyl, cyclopentyl, cyclohexyl, phenyl, tolyl, xylyl, α-naphthyl, β-naphthyl and biphenylyl (all isomers being included).

(2) Substituted hydrocarbon radicals; that is, radicals containing non-hydrocarbon substituents which, in the context of this invention, do not alter the predominantly hydrocarbon character of the radical. Those skilled in the art will be aware of suitable substituents; examples are halo, alkoxy (especially lower alkoxy), carbalkoxy, nitro, cyano and alkyl sulfone.

(3) Hetero radicals; that is, radicals which, while predominantly hydrocarbon in character within the context of this invention, contain atoms other than carbon present in a chain or ring otherwise composed of carbon atoms. Suitable hetero atoms will be apparent to those skilled in the art and include, for example, nitrogen, oxygen, sulfur and silicon.

For the most part, not more than three substituents or hetero atoms will be present for each 10 carbon atoms in the hydrocarbon-based radical. An exception comprises molecules in which silicon is a hetero atom, which may, for example, contain three hetero atoms for as few as 4 carbon atoms.

Reagent A according to this invention is at least one diamine having formula I. The $R^1$ value therein is most often an aromatic hydrocarbon radical containing about 6-20 carbon atoms or a halogenated derivative thereof, an alkylene or cycloalkylene radical containing about 2-20 carbon atoms or a bis-alkylenepoly-(dialkylsiloxane) radical. The aromatic hydrocarbon radicals are preferred.

Examples of suitable diamines of formula I are ethylenediamine, propylenediamine, trimethylenediamine, diethylenetriamine, triethylenetetramine, heptamethylenediamine, octamethylenediamine, 2,11-dodecanediamine, 1,12-octadecanediamine, 3-methylheptamethylenediamine, 4,4-dimethylheptamethylene-

diamine, 5-methylnonamethylenediamine, 2,5-dimethylhexamethylenediamine, 2,2-dimethylpropylenediamine, N-methyl-bis(3-aminopropyl)-amine, 3-methoxyhexamethylenediamine, 1,2-bis(3-aminopropoxy)ethane, bis(3-aminopropyl) sulfide, 1,4-cyclohexanediamine, bis-(4-aminocyclohexyl)methane, m-phenylenediamine, p-phenylenediamine, 2,4-diaminotoluene, 2,6-diaminotoluene, m-xylylenediamine, p-xylylenediamine, benzidine, 3,3'-dimethyl-benzidine, 3,3'-dimethoxybenzidine, 1,6-diaminonaphthalene, 4,4'-diaminodiphenylmethane, 4,4'-diaminodiphenylpropane, 2,4-bis-(β-amino-t-butyl)toluene, bis(p-β-methyl-o-aminopentyl)-benzene, 1,3-diamino-4-iospropylbenzene, 4,4-diaminodiphenyl sulfone, 4,4'-diaminodiphenyl ether and bis(3-aminopropyl) tetramethyldisiloxane. Mixtures of these diamines may also be used. Particularly preferred are the aromatic diamines, especially m-phenylenediamine and 4,4'-diaminodiphenylmethane; the $R^1$ radical is then either

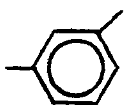 (preferably) 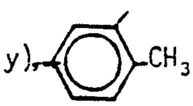 or 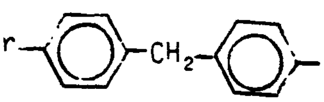 .

In reagent B (the carboxy anhydride) as defined by formula II, $R^2$ is usually a trivalent aliphatic radical containing about 2-20 carbon atoms or, preferably, a trivalent aromatic radical containing about 6-20 carbon atoms. Illustrative carboxy anhydrides are trimellitic anhydride, 5-chlorotrimellitic anhydride, benzene-1,2,3-tricarboxylic acid anhydride and carboxysuccinic anhydride. The preferred carboxy anhydrides are those in which $R^2$ is an aromatic and especially an aromatic hydrocarbon radical. Trimellitic anhydride is most preferred.

In reagent C (the dianhydride) as defined by formula III, $R^3$ is a tetravalent radical which is typically analogous to those previously described with reference to $R^1$ and $R^2$. A number of suitable dianhydrides are disclosed in columns 5-6 of U.S. Patent 4,061,622 and in U.S. Patent 4,331,799. The disclosures of both of said patents are incorporated by reference herein.

A particularly preferred group of dianhydrides of formula III comprises those in which $R^3$ is

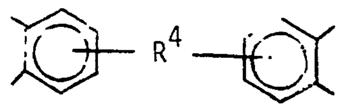

,

wherein $R^4$ is oxygen, sulfur, $-SO_2-$, lower alkylene (the word "lower" as used herein denoting up to 7 carbon atoms) or, most desirably, $-O-R^5-O-$ and $R^5$ is a divalent aromatic hydrocarbon-based radical. $R^5$ is most often a divalent radical derived from benzene or a substituted benzene, biphenyl or a substituted biphenyl, or a diphenylalkane which may contain substituents on one or both aromatic radicals. The following radicals are preferred as $R^5$:

(VI)

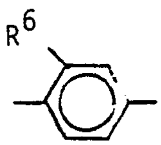

(VII)

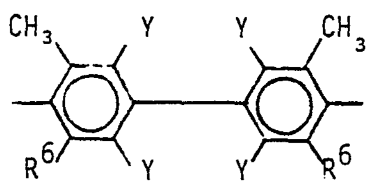

(VIII)

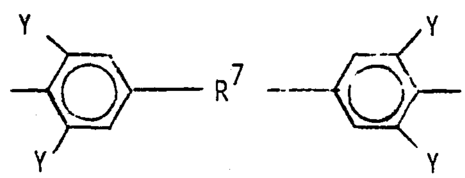

wherein each $R^6$ is independently hydrogen or methyl, $R^7$ is a straight-chain or branched alkylene radical containing 1-5 carbon atoms and is most often the isopropyidene radical, and each Y is independently hydrogen or halogen (usually chlorine or bromine). Mixtures of the foregoing formulas are also contemplated. Most preferred is the radical derived from bisphenol A [i.e., 2,2'-bis(4-hydroxyphenyl)propane] by the removal of both hydroxy groups therefrom, and having formula VIII wherein $R^7$ is isopropylidene and each Y is hydrogen. Thus, the most preferred dianhydride for use as reagent C is 2,2-bis[4-(3,4-dicarboxyphenoxy)phenyl]-propane dianhydride, hereinafter referred to as "bisphenol A dianhydride".

The reaction producing the prepolymers of this invention is ordinarily effected by merely blending reagents A, B and C and heating to a temperature at which said reaction takes place. The reaction with the two anhydrides may be simultaneous (i.e., reagents B and C used together) or sequential (i.e., reagent C added first, followed by reagent B); however, simultaneous reaction is usually preferred since no particular advantage results from sequential addition.

The reaction temperature is typically within the range of about 100-200°C, and at least partially above about 160°C to insure removal of all water of reaction and complete imidization of any amic acids formed. It is usually advantageous to carry out the reaction in a substantially inert organic diluent. Typical diluents are such aprotic solvents as benzene, toluene, xylene, o-dichlorobenzene, dimethylformamide, dimethylacetamide, dimethyl sulfoxide or N-methylpyrrolidone.

A factor in the formation of the prepolymer is the difference in reactivity with reagent A of intramolecular anhydride and carboxylic acid moieties. The reaction of a diamine with intramolecular anhydride moieties is strongly favored over that with carboxylic acid moieties. This selectivity insures production of a carboxy-terminated prepolymer.

It is frequently preferred to include in the reaction mixture a catalytic amount of at least one tertiary amine, which may be aliphatic, alicyclic or heterocyclic. Suitable amines include triethylamine, N-methylpiperidine and 4-dimethylaminopyridine. The required amount of tertiary amine is small, typically about 0.05-0.5% by weight based on the total of reagents A, B and C.

The molecular weight of the prepolymer intermediate will depend to a large extent on the molecular ratio of reagent C

to reagent B in the reaction mixture, with higher molecular weight prepolymers being obtained as the proportion of reagent C is increased. Molar ratios of at least about 0.25:1 are within the scope of the invention. A ratio of at least 0.5:1 is preferred, since lower ratios will produce a prepolymer in which some molecular species contain moieties derived from reagents A and B only. There does not appear to be any upper limit to this molar ratio, although a higher value than about 5:1 usually affords no particular advantage.

The proportion of reagent A in the reaction mixture is determined so as to produce a carboxy-terminated prepolymer. This is effected by using a ratio of equivalents of reagent A to anhydride equivalents of reagents B and C combined of about 1:1, typically about 0.95-1.05:1. The term "anhydride equivalent" as used herein is based on the number of anhydride groups theoretically present per molecule, with free carboxylic acid groups being disregarded; thus, one mole of reagents B and C is one and two anhydride equivalents, respectively. One mole of reagent A is two equivalents thereof, since two amino groups are present per molecule. Under these conditions, only the anhydride groups react with reagent A and the free carboxy groups become the terminal groups in the prepolymer.

Structural evidence indicates that the prepolymers of this invention have the formula

(IX) 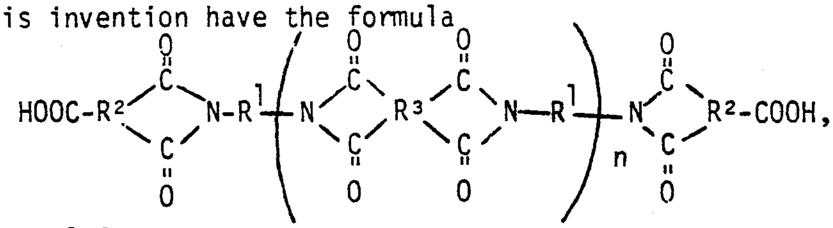

wherein $R^{1-3}$ are as previously defined.

In formula IX, the value of n will theoretically be twice the molar ratio of component C to component B. As said molar ratio varies from 0.25:1 to 5:1, therefore, the average value of n will vary from 0.5 to 10 and is preferably at least 1. Prepolymers having formula IX are an embodiment of the invention.

The preparation of the prepolymers of the invention is illustrated by the following examples. All parts are by weight.

EXAMPLES 1-6

A mixture of 19.2 grams (0.1 mole) of trimellitic anhydride (reagent B), bisphenol A dianhydride (reagent C), a stoichiometric amount of m-phenylenediamine (MPD) or 4,4'-diamino-diphenylmethane (MDA) (reagent A) with respect to anhydride equivalents of reagents B and C, 0.01 part of 4-dimethylaminopyridine, 30 parts of N-methylpyrrolidone and 47 parts of toluene was slowly heated to 130°C, during which time the mixture became homogeneous and a toluene-water azeotrope began to distill. Heating was continued to approximately 180°C as water was removed by distillation. The residue was a solution of the desired prepolymer.

The reagents, proportions and other pertinent data for Examples 1-6 are given in Table I.

TABLE I

| Example | Amine | Mole ratio, C:B |
|---|---|---|
| 1 | MPD | 0.5 |
| 2 | MPD | 0.25 |
| 3 | MPD | 1.0 |
| 4 | MDA | 0.5 |
| 5 | MDA | 1.0 |
| 6 | MDA | 1.5 |

For the formation of the polyamideimides of the invention, the prepolymer or a functional derivative thereof (reagent D) is reacted with reagent E which may be a diisocyanate or a diamine. If reagent D is the prepolymer itself, the reaction forming the polyamideimide proceeds most effectively when reagent E is a diisocyanate, and involves the condensation of one carboxylic acid moiety with one isocyanate moiety to form an amide linkage with the elimination of one mole of carbon dioxide. A corresponding carboxylic acid-amine reaction is somewhat slow and difficult, so if reagent E is a diamine it is preferred to use as reagent D a functional derivative of the prepolymer such as an acyl halide thereof. For electrical

uses of the polyamideimides, however, where the presence of halide ions may be detrimental, and also for the sake of simplicity of production, the reaction between the prepolymer and the diisocyanate is preferred. Frequent reference hereinafter will be made to diisocyanates as reagent E, but it should be understood that diamines may be substituted therefor under appropriate conditions.

The diisocyanates and diamines suitable for use as reagent E have formulas V and VI, respectively. In these formulas, $R^4$ may be a divalent hydrocarbon radical similar to $R^1$ in formula I. It may be the same as $R^1$ or different. When reagent D is a diamine, each of $R^5$ and $R^6$ may be hydrogen or a lower hydrocarbon-based radical, preferably a hydrocarbon radical and still more preferably a lower alkyl (especially methyl). When $R^5$ or $R^6$ is other than hydrogen, the reaction thereof with the acid moiety in the prepolymer will form an N-substituted amide linkage. Such linkages are, of course, not formed when reagent E is a diisocyanate.

Illustrative diamines suitable for use as reagent E include those recited hereinabove with reference to reagent A, as well as, for example, the corresponding N,N'-dimethyl compounds. Illustrative diisocyanates are p-phenylene diisocyanate, 2,4-toluene diisocyanate, 2,6-toluene diisocyanate, xylene diisocyanates, mesitylene diisocyanate, durene diisocyanate, 4-methoxy-1,3-phenylene diisocyanate, 4-chloro-1,3-phenylene diisocyanate, 4-isopropyl-1,3-phenylene diisocyanate, the tolidine diisocyanates, dianisidine diisocyanate, 4,4'-methylenebis(phenyl isocyanate), 4,4'-methylenebis(o-tolyl isocyanate), 4,4'-methylenebis(cyclohexylisocyanate), 1,5-naphthalene diisocyanate, 4,4'-bis(isocyanatophenyl) ether, 2,4'-bis(isocyanatophenyl) ether, and 4,4'-bis(isocyanatophenyl) sulfone. Mixtures of the foregoing isocyanates are also contemplated. The preferred diisocyanates, from the standpoint of availability, low cost and particular suitability for preparing the polyamideimides of this invention, are 2,4-toluene diisocyanate (2,4-TDI), 2,6-toluene diisocyanate (2,6-TDI), and 4,4'-methylenebis(phenyl isocyanate) (MDI).

Reagent E may also be an isocyanate- or amine-terminated polymer, such as a polyamide or polyurethane. In that case, $R^4$ is a polymeric radical and the product is a block copolymer with polyimide and polyamide, polyurethane or similar blocks connected by amide linkages.

For the preparation of the copolyamideimides, a mixture of reagents D and E is normally heated to a temperature within the range of about 150-225°C until carbon dioxide evolution is complete. The reaction may be effected in a substantially inert organic diluent such as those previously listed with reference to prepolymer formation; the preferred diluents for polymer formation are the dipolar aprotic solvents such as dimethylformamide, dimethylacetamide, dimethyl sulfoxide and N-methylpyrrolidone.

The ratio of equivalents of reagent D to reagent E (the equivalent weight of each being half its molecular weight) may be varied in accordance with the polymer molecular weight desired. In general, ratios between about 0.5:1 and about 2:1 are contemplated, these being the minimum and maximum values which will produce a product containing at least two prepolymer- or diisocyanate-derived units. Ratios from about 0.67:1 to about 1.5:1 are preferred since products of higher molecular weight are then obtained. The most preferred ratio is about 1:1. Because the reaction between reagents D and E normally does not proceed to completion, it is frequently advisable to analyze the reaction mixture for free acid groups after the initial reaction with reagent E, and subsequently to add an additional increment thereof effective to reduce the residual acid content to less than about 1%. Most often, no more than about 10% by weight of the original amount of reagent E is required for this purpose. Thus, a ratio of equivalents of reagent D to reagent E between about 0.9:1 and about 1:1 is especially preferred. It is also contemplated to incorporate in the reaction mixture minor amounts of chain-stopping or end-capping reagents, typically monoisocyanates such as phenyl isocyanate, monoamines such as aniline, monocarboxylic acids such as benzoic acid or monoanhydrides such as phthalic anhydride.

It is believed that the copolyamideimides of this invention consist essentially of units having the formula

(X) 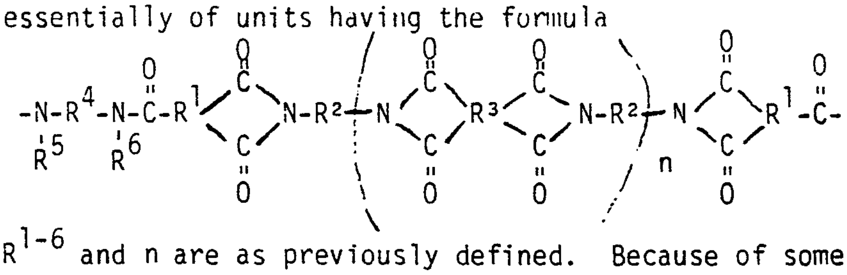 ,

wherein $R^{1-6}$ and n are as previously defined. Because of some uncertainty regarding this structure, however, they are also appropriately defined in terms of the method for their preparation.

The copolyamideimides of this invention normally have weight average molecular weights from about 30,000 to about 150,000. The intrinsic viscosities thereof, determined in dimethylformamide at 25°C, are in the range of about 0.2-0.9 dl./g.

The preparation of the copolyamideimides of this invention is illustrated by the following examples.

EXAMPLE 7

A mixture of equivalent amounts of the prepolymer solution of Example 1 and 2,4-toluene diisocyanate was prepared at room temperature and heated slowly to about 180°C over 3 hours, during which time vigorous carbon dioxide evolution occurred. The viscosity of the solution increased markedly during this period. The solution was cooled, dissolved in dimethylformamide and precipitated by pouring into methanol. The copolyamideimide was removed by filtration and dried in a vacuum oven; it had an intrinsic viscosity of 0.33 dl./t. and a glass transition temperature of 265°C.

EXAMPLES 8-17

To 0.1 equivalent of the prepolymers of Examples 1-6 was added slowly, at 150-190°C, a solution of 0.1 equivalent of diisocyanate in 50 ml. of o-dichlorobenzene. After carbon dioxide evolution was complete, the mixture was titrated to determine the presence of free acid and the additional amount of diisocyanate calculated to neutralize the free acid was added. The polymer was then precipitated and dried in accordance with Example 7.

The compositional details and properties of the products of Examples 8-17 are given in Table II. All percentages are by weight. Heat distortion temperatures (HDT) were determined by ASTM procedure D648, and weight average molecular weights by gel permeation chromatography.

TABLE II

| Example | Prepolymer of Example | Diisocyanate | Intrinsic vis.,dl./g. | Tg,°C | HDT, °C | $\bar{M}w$ |
|---|---|---|---|---|---|---|
| 8 | 1 | 2,4-TDI | 0.45 | 265 | -- | -- |
| 9 | 1 | 65% 2,4-TDI, 35% 2,6-TDI | 0.43 | 262 | -- | -- |
| 10 | 1 | MDI | 0.30 | 245 | -- | 65,000 |
| 11 | 2 | 2,4-TDI | 0.46 | 275 | -- | -- |
| 12 | 3 | 2,4-TDI | 0.44 | 248 | 215 | -- |
| 13 | 3 | MDI | 0.22 | 229 | -- | 70,000 |
| 14 | 4 | 2,4-TDI | 0.47 | 254 | -- | 52,000 |
| 15 | 4 | MDI | 0.79 | 244 | -- | 127,000 |
| 16 | 5 | 2,4-TDI | 0.34 | 230 | -- | 72,000 |
| 17 | 6 | 2,4-TDI | 0.44 | 225 | -- | 83,000 |

The copolyamideimides of this invention may be converted into films for wrapping and packaging applications and into molding compounds. They are also useful for application in solution to electrical conductors made of copper, aluminum or the like, particularly wires, as insulating coatings. If desired, additional overcoats of polyamides, polyesters, silicones, polyvinylformals, epoxy resins, polyimides, polytetrafluoroethylene or the like may be further applied to such insulated conductors.

What is claimed is:

1. A method for preparing a carboxy-terminated prepolymer which comprises reacting, under conditions whereby all water of reaction is removed:

(A) at least one diamine having the formula

(I) $H_2N-R^1-NH_2$ ,

wherein $R^1$ is a divalent hydrocarbon-based radical, with

(B) at least one carboxy anhydride of the formula

(II ) 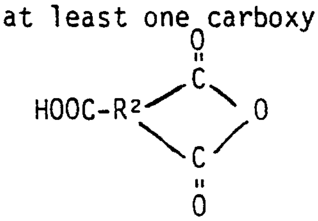 ,

wherein $R^2$ is a trivalent hydrocarbon-based radical, and

(C) at least one dianhydride of the formula

(III) 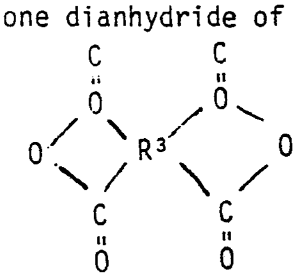 ,

wherein $R^3$ is a tetravalent hydrocarbon-based radical;

the molar ratio of reagent C to reagent B being at least about 0.25:1 and the ratio of equivalents of reagent A to anhydride equivalents of reagents B and C combined being about 1:1.

2. A method according to claim 1 wherein $R^1$ is an aromatic hydrocarbon radical containing about 6 - 20 carbon atoms or a halogenated derivative thereof, an alkylene or cycloalkylene radical containing about 2-20 carbon atoms or a bis-alkylenepoly(dialkylsiloxane) radical; each of $R^2$ and $R^3$ is an aromatic radical containing about 6-20 carbon atoms; and the reaction mixture also contains a catalytic amount of at least one tertiary amine.

3. A method according to claim 2 wherein $R^3$ is

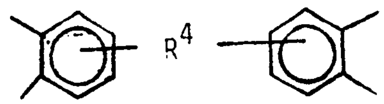

wherein $R^4$ is oxygen, sulfur, $-SO_2-$, lower alkylene or $-O-R^5-O-$, and $R^5$ is a divalent aromatic hydrocarbon-based radical.

4. A method according to claim 3 wherein reagent B is trimellitic anhydride, reagent C is bisphenol A dianhydride, and the molar ratio of reagent C to reagent B is at least about 0.5:1.

5. A method according to claim 4 wherein $R^1$ is an aromatic hydrocarbon radical.

6. A method according to claim 5 wherein reagent A is m-phenylenediamine, m-toluenediamine or 4,4'-diaminodiphenylmethane.

7. A carboxy-terminated prepolymer prepared by the method of claim 1.

8. A carboxy-terminated prepolymer prepared by the method of claim 4.

9. A carboxy-terminated prepolymer prepared by the method of claim 6.

10. A carboxy-terminated prepolymer having the formula

(IX) 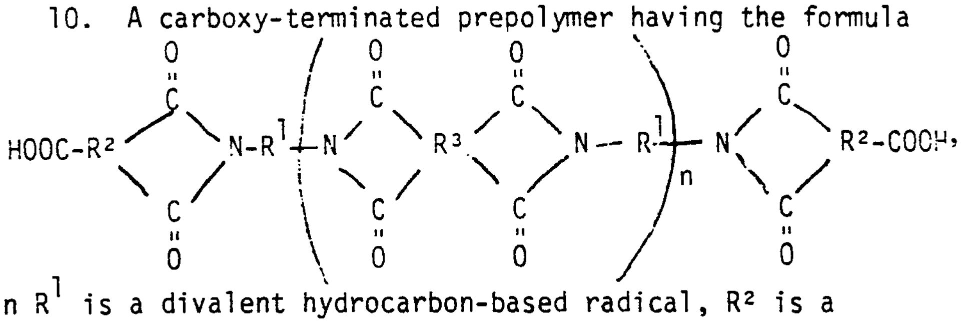

wherein $R^1$ is a divalent hydrocarbon-based radical, $R^2$ is a trivalent hydrocarbon-based radical, $R^3$ is a tetravalent hydrocarbon-based radical, and the average value of n is at least 0.5.

11. A prepolymer according to claim 10 wherein $R^1$ is an aromatic hydrocarbon radical containing about 6-20 carbon atoms or a halogenated derivative thereof, an alkylene or cycloalkylene radical containing about 2-20 carbon atoms or a bis-alkylenepoly(dialkylsiloxane) radical, and each of $R^2$ and $R^3$

is an aromatic hydrocarbon radical containing about 6-20 carbon atoms.

12. A prepolymer according to claim 11 wherein $R^3$ is

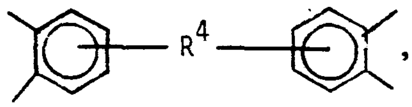,

wherein $R^4$ is oxygen, sulfur, $-SO_2-$, lower alkylene or $-O-R^5-O-$ and $R^5$ is a divalent aromatic hydrocarbon-based radical.

13. A prepolymer according to claim 12, wherein $R^2$ is

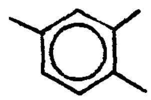,

$R^3$ is

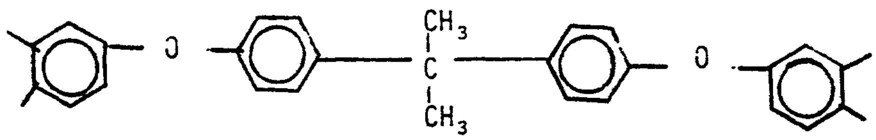

and the average value of n is at least 1.

14. A prepolymer according to claim 13 wherein $R^1$ is an aromatic hydrocarbon radical.

15. A prepolymer according to claim 14 wherein $R^1$ is

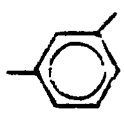, 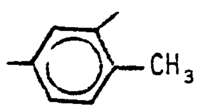 or 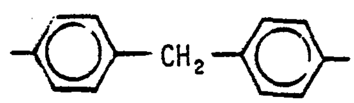.

16. A method for preparing a copolyamideimide which comprises reacting (D) a prepolymer according to claim 1, or a functional derivative thereof, with (E) at least one of diisocyanates having the formula

(IV) $OCN-R^4-NCO$

and diamines having the formula

(V ) $R^5NH-R^4-NHR^6$,

wherein $R^4$ is a divalent hydrocarbon-based or polymeric radical and each of $R^5$ and $R^6$ is independently hydrogen or a lower hydrocarbon-based radical.

17. A method according to claim 16 wherein reagent D is said prepolymer; reagent E is at least one diisocyanate; each of $R^1$ and $R^4$ is individually an aromatic hydrocarbon radical containing about 6-20 carbon atoms or a halogenated derivative thereof, an alkylene or cycloalkylene radical containing about 2-20 carbon atoms or a bis-alkylenepoly(dialkylsiloxane) radical; each of $R^2$ and $R^3$ is an aromatic radical containing about 6-20 carbon atoms; and the ratio of equivalents of reagent D to reagent E is from about 0.67:1 to about 1.5:1.

18. A method according to claim 17 wherein each of $R^1$ and $R^4$ is an aromatic hydrocarbon radical, $R^2$ is

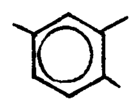

and $R^3$ is

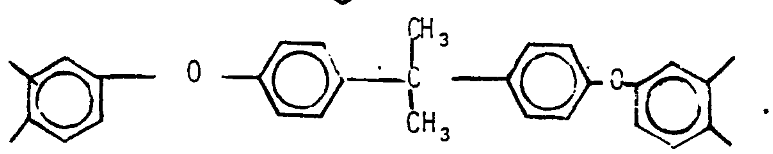

19. A method according to claim 18 wherein reagent E is at least one of 2,4-toluene diisocyanate, 2,6-toluene diisocyanate and 4,4'-methylene bis(phenyl isocyanate).

20. A copolyamideimide prepared by the method of claim 16.

21. A copolyamideimide prepared by the method of claim 17.

22. A copolyamideimide prepared by the method of claim 19.

23. A copolyamideimide consisting essentially of units having the formula

(X) 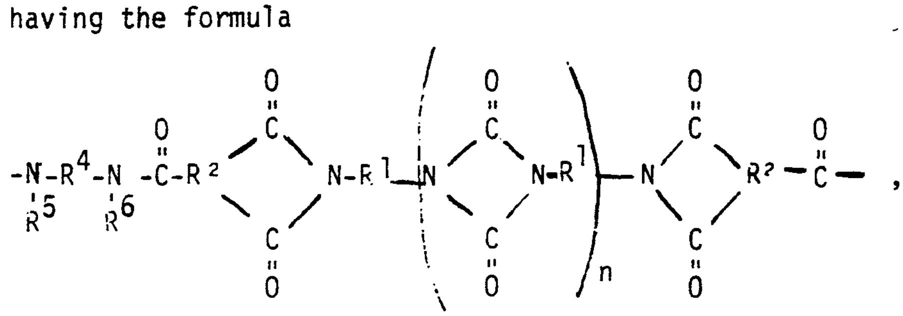

wherein each of $R^1$ and $R^4$ is independently a divalent hydrocarbon-based radical, $R^2$ is a trivalent hydrocarbon-based radical, $R^3$ is a tetravalent hydrocarbon-based radical, each of $R^5$ and $R^6$ is independently hydrogen or a hydrocarbon-based radical, and the average value of n is at least 0.5.

24. A copolyamideimide according to claim 23 wherein each of $R^1$ and $R^4$ is individually an aromatic hydrocarbon radical containing about 6-20 carbon atoms or a halogenated derivative thereof, an alkylene or cycloalkylene radical containing about 2-20 carbon atoms or a bis-alkylenepoly(dialkylsiloxane) radical; each of $R^2$ and $R^3$ is an aromatic radical containing about 6-20 carbon atoms; and each of $R^5$ and $R^6$ is hydrogen.

25. A copolyamideimide according to claim 26 wherein each of $R^1$ and $R^4$ is an aromatic hydrocarbon radical, $R^2$ is

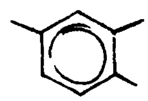

,

$R^3$ is

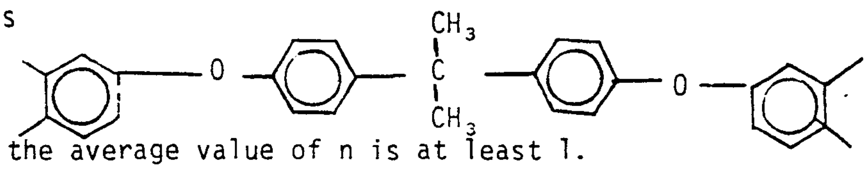

and the average value of n is at least 1.

26. A copolyamideimide according to claim 25 wherein $R^4$ is at least one of the 2,4-tolylene, 2,6-tolylene and 4,4'-methylenebis-phenyl radicals.

European Patent Office

# EUROPEAN SEARCH REPORT

0184591

Application number

EP 84 11 5322

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 485 796 (A.B. NASELOW et al.)<br>* Column 1, line 27 - column 2, line 72; claims *<br>--- | 1 | C 08 G 73/14<br>C 08 G 18/64<br>H 01 B 3/30 |
| D,A | US-A-3 929 691 (ALLARD)<br>--- | | |
| D,A | US-A-3 843 587 (J.T. KEATING et al.)<br>--- | | |
| A | FR-A-1 559 357 (Dr. BECK)<br>--- | | |
| A | US-A-4 042 750 (R.B. HANSON)<br>----- | | |
| | | | TECHNICAL FIELDS SEARCHED (Int. Cl.4) |
| | | | C 08 G |

The present search report has been drawn up for all claims

| Place of search | Date of completion of the search | Examiner |
|---|---|---|
| THE HAGUE | 30-07-1985 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82